# EUROPEAN PATENT APPLICATION

(11) **EP 4 679 029 A1**
(43) Date of publication of application: **14.01.2026**
(21) Application number: 24803261.7
(22) Date of filing: 01.03.2024
(51) Int. Cl.: G01B 11/00, B21C 37/08, B21C 51/00

(54) **SEAM POSITION DETECTION METHOD, WELDED STEEL PIPE MANUFACTURING METHOD, WELDED STEEL PIPE QUALITY MANAGEMENT METHOD, SEAM POSITION DETECTION DEVICE, AND WELDED STEEL PIPE MANUFACTURING FACILITY**

(30) Priority: 11.05.2023 JP 2023078334
(71) Applicant: JFE Steel Corporation, Tokyo 100-0011 (JP)
(72) Inventor: IGIMI, Shinji, Tokyo 100-0011 (JP); ONO, Hiroaki, Tokyo 100-0011 (JP); KONDO, Shosuke, Tokyo 100-0011 (JP); FUKUDA, Makoto, Tokyo 100-0011 (JP); HARADA, Junji, Tokyo 100-0011 (JP)
(74) Representative: Grünecker Patent- und Rechtsanwälte PartG mbB
(86) International application number: PCT/JP2024/007852
(87) International publication number: WO 2024/232146

(57) **Abstract**

A seam position detection method is a method of detecting, when a welded steel pipe is heated, a position of a seam portion of the welded steel pipe, the seam position detection method including a position detection step of detecting a position of the seam portion after heating and a position of a heating portion from images obtained by capturing the seam portion after heating and the heating portion each irradiated with light having a wavelength different from a wavelength of thermal radiation by heating, the images being captured in the same field of view, a determination step of determining whether the position of the seam portion after heating needs to be corrected through a comparison between a position of the seam portion before heating, the position being acquired in advance, and the position of the seam portion after heating, and a correction step of correcting, based on the position of the seam portion before heating, the position of the seam portion after heating when the position of the seam portion after heating needs to be corrected.

## Description

### Field

The present invention relates to a seam position detection method, a manufacturing method of a welded steel pipe, a quality control method of the welded steel pipe, a seam position detection apparatus, and a manufacturing equipment of the welded steel pipe.

### Background

In a manufacturing line of a welded steel pipe (for example, an electric resistance welded pipe) in a steel manufacturing process, a plate-shaped steel plate is bent into a cylindrical shape using a forming roll, and both ends of the steel plate are abutted to each other at an upper portion and are welded. In the manufacturing line of the welded steel pipe, thereafter, a weld bead formed in a welded portion is cut and removed, and in order to improve the material properties of the welded portion, an annealing treatment (annealing) of heating the welded portion again is performed to manufacture the welded steel pipe.

Annealing is often performed over a plurality of times by induction heating, and it is important to accurately align and heat only a seam portion without affecting a base material by a heating unit (an annealing heater). However, since pass line fluctuations or twists of the welded steel pipe occur, currently, an operator visually observes the running state of the welded steel pipe and the deviation of the seam portion and a heating portion from time to time, and manually performs alignment as appropriate.

Here, in the present specification, the seam portion refers to a portion at which the base plate is joined by welding, that is, a welded portion. In the heating step (annealing step), it is ideal to perform heating so that the center of a range to be heated coincides with the seam portion. On the other hand, it is difficult to identify the seam portion by appearance. Therefore, normally, a cut portion at which gloss is higher than that of a surrounding base material portion by the cutting of a bead portion is regarded as a seam portion, and an operator (worker) visually confirms whether the position of the seam portion coincides with the position of a heating portion, that is, a heater, and performs an operation.

However, in this case, problems such as difficulty in visual recognition because the seam portion serves as the heating portion and emits red-heat radiation, and severity for an operator to constantly stare at the surface emitting red-heat radiation occur. In addition, in order to accurately monitor the seam portion, it is necessary to approach the operating line being conveyed or temporarily stop the operating line. However, the former has a problem in safety, and the latter has a problem in that efficiency deteriorates.

In order to address the above-described problems, various position detection methods for a seam portion of a welded steel pipe by an electromagnetic method, a marking method, an image method, and an optical method have been proposed in the related art. For example, in Patent Literature 1, the position coordinates of a seam portion in the width direction are detected by using the fact that a reflection pattern of emitted laser light is different between the seam portion and a base material portion.

### Citation List

### Patent Literature

Patent Literature 1: JP 2007-120985 A

### Summary

### Technical Problem

In Patent Literature 1, a seam portion is detected by utilizing the fact that a reflection pattern of laser light is different between the seam portion and an underlying steel pipe base material portion. However, for example, when the conveyance speed of a welded steel pipe is slow, an oxide film may adhere to a part of the surface of the seam portion, and the mirror surface property may deteriorate. As the mirror surface property deteriorates, a difference in reflection pattern between the seam portion and the base material portion becomes ambiguous, and it becomes difficult to accurately detect the position coordinates of the seam portion.

The present invention has been made in view of the above-described problem, and an object thereof is to provide a seam position detection method, a manufacturing method of a welded steel pipe, a quality control method of the welded steel pipe, a seam position detection apparatus, and a manufacturing equipment of the welded steel pipe capable of accurately detecting the position of a seam portion of the welded steel pipe in a manufacturing step of the welded steel pipe.

### Solution to Problem

(1) To solve the problem and achieve the object, a seam position detection method according to the present invention is the method of detecting a position of a seam portion of a welded steel pipe when the welded steel pipe is heated. The seam position detection method includes: a position detection step of detecting a position of the seam portion after heating and a position of a heating portion from images obtained by capturing the seam portion after heating and the heating portion each irradiated with light having a wavelength different from a wavelength of thermal radiation by heating, the images being captured in a same field of view; a determination step of determining whether the position of the seam portion after heating needs to be corrected by comparing a position of the seam portion before heating, the position being acquired in advance, and the position of the seam portion after heating; and a correction step of correcting, based on the position of the seam portion before heating, the position of the seam portion after heating when the position of the seam portion after heating needs to be corrected.
(2) Moreover, in the correction step of the seam position detection method according to above (1), a width of the seam portion after heating may be corrected based on a positional relationship between a center position of the seam portion after heating and a center position of the heating portion, and a width of the seam portion before heating.
(3) Moreover, a manufacturing method of a welded steel pipe according to the present invention includes:
   a welding step of welding a butt portion of a steel plate formed into a cylindrical shape; a cutting step of cutting a bead portion after welding; a heating step of heating a seam portion after cutting with a heater; and a position detection step of detecting a position of the seam portion by the seam position detection method according to above (1) or (2).
(4) Moreover, a quality control method of a welded steel pipe according to the present invention is the quality control method controlling quality of the welded steel pipe based on a deviation amount of the position of the heating portion with respect to the position of the seam portion, the deviation amount being detected by the seam position detection method according to above (1) or (2) .
(5) Moreover, a seam position detection apparatus according to the present invention is the apparatus being configured to detect a position of a seam portion of a welded steel pipe when the welded steel pipe is heated. The seam position detection apparatus includes: a position detection unit configured to detect a position of the seam portion after heating and a position of a heating portion from images obtained by capturing the seam portion after heating and the heating portion each irradiated with light having a wavelength different from a wavelength of thermal radiation by heating, the images being captured in a same field of view; a determination unit configured to determine whether the position of the seam portion after heating needs to be corrected by comparing a position of the seam portion before heating, the position being acquired in advance, and the position of the seam portion after heating; and a correction unit configured to correct, based on the position of the seam portion before heating, the position of the seam portion after heating when the position of the seam portion after heating needs to be corrected.
(6) Moreover, a manufacturing equipment of a welded steel pipe according to the present invention includes: a welding machine configured to weld a butt portion of a steel plate formed into a cylindrical shape; a cutting machine configured to cut a bead portion after welding; one or a plurality of heaters configured to heat a seam portion after cutting; and the seam position detection apparatus according to above (5), the seam position detection apparatus being provided behind any one of the heaters.

### Advantageous Effects of Invention

According to the present invention, the position of a seam portion after heating can be accurately detected by using information regarding the position of the seam portion before heating.

### Brief Description of Drawings

FIG. 1 is a diagram illustrating a schematic configuration of a seam position detection apparatus according to an embodiment of the present invention.
FIG. 2 is a diagram illustrating an example of a configuration of a seam width detection unit of the seam position detection apparatus according to the embodiment of the present invention.
FIG. 3 illustrates images of a welded steel pipe cutout sample, in which FIG. 3(a) illustrates an image of the welded steel pipe cutout sample before heating by a heater, and FIG. 3(b) illustrates an image of the welded steel pipe cutout sample after heating by the heater.
FIG. 4 illustrates images of the welded steel pipe after heating by the heater, in which FIG. 4(a) illustrates an image in a case where a conveyance speed of the welded steel pipe is high and an adhesion amount of an oxide film to a seam portion is small, and FIG. 4(b) illustrates an image in a case where the conveyance speed of the welded steel pipe is low and the adhesion amount of the oxide film to the seam portion is large.
FIG. 5 is a diagram for description of a method of correcting a position of a seam portion in a case where an oxide film adheres to a part of the seam portion, FIG. 5(a) is a diagram in a case where a detected center position of the seam portion after heating is located above a center position of a heating portion, and FIG. 5(b) is a diagram in a case where the detected center position of the seam portion after heating is located below the center position of the heating portion.
FIG. 6 is a diagram for description of a method of detecting an upper end position and a lower end position of the seam portion based on a luminance value.
FIG. 7 is a flowchart illustrating an example of a flow of a seam position detection method according to an embodiment of the present invention.
FIG. 8 is a flowchart illustrating details of a seam position detection step of the seam position detection method according to the embodiment of the present invention.
FIG. 9 is a flowchart illustrating details of a determination step of the seam position detection method according to the embodiment of the present invention.
FIG. 10 is a graph illustrating a result of comparing the center positions of seam portions calculated by the present invention, the related art, and visual observation for a steel pipe conveyed at a speed at which the oxide film easily adheres to the surface, according to an example of the present invention.

### Description of Embodiments

A seam position detection method, a manufacturing method of a welded steel pipe, a quality control method of the welded steel pipe, a seam position detection apparatus, and a manufacturing equipment of the welded steel pipe according to an embodiment of the present invention will be described with reference to the drawings.

### (Seam Position Detection Apparatus)

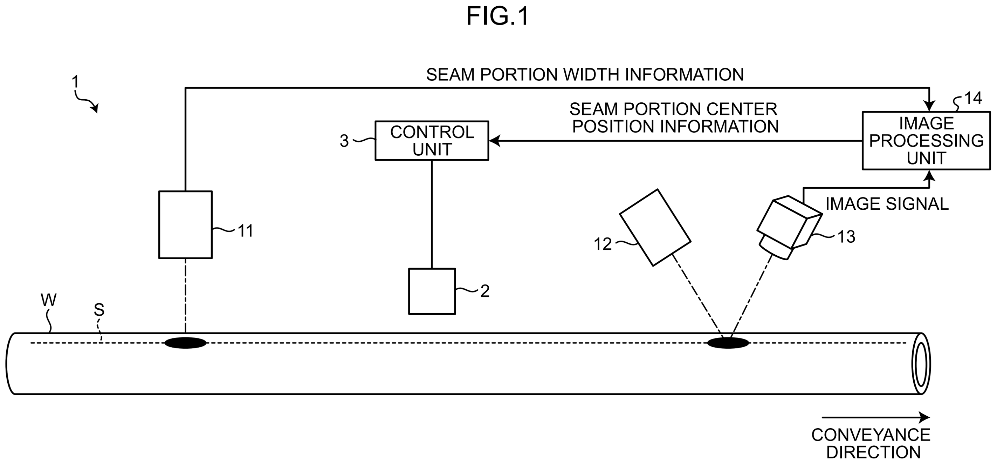

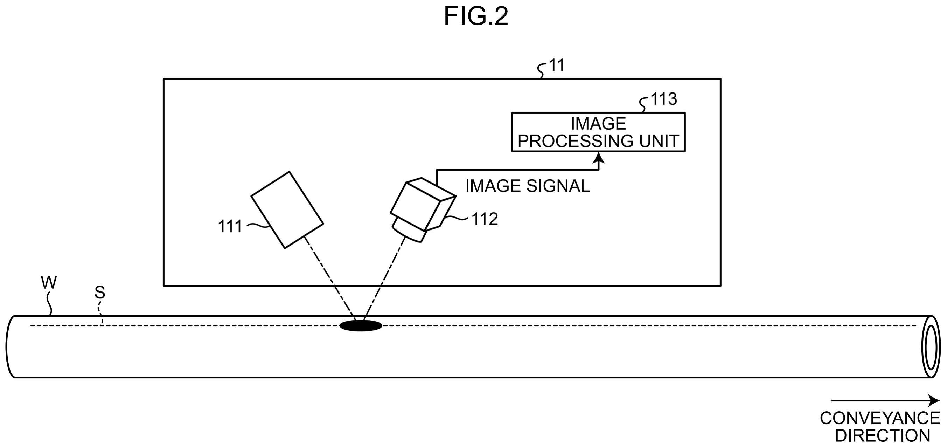

A configuration of the seam position detection apparatus according to the embodiment will be described with reference to FIGS. 1 and 2. A seam position detection apparatus 1 is an apparatus to detect the position of a seam portion S of a welded steel pipe W heated by a heater 2. In the present embodiment, a "position of the seam portion S" may be referred to as a "seam position", and a "width of the seam portion S" may be referred to as a "seam width".

The seam position detection apparatus 1 detects the position of the seam portion S after heating by the heater 2, and "after heating by the heater 2" indicates after heating by at least one heater 2. For example, as illustrated in FIG. 1, when only one heater 2 is provided in a manufacturing equipment of the welded steel pipe W, the seam position detection apparatus 1 is disposed behind the heater 2 and detects the position of the seam portion S after heating by the heater 2.

On the other hand, in the manufacturing equipment of the welded steel pipe W, a plurality of heaters 2 may be provided in the conveyance direction of the welded steel pipe W. In this case, the seam position detection apparatus 1 is disposed behind one of the heaters 2 and detects the position of the seam portion S after being heated by the heater 2. Further, when a plurality of heaters 2 are arranged, the seam position detection apparatus 1 is preferably disposed between the first heater 2 and the second heater 2. As described above, the seam position detection apparatus 1 detects the position of the seam portion S at any timing after a heating step of heating the welded steel pipe W by the heater 2 or during the heating step.

In the present embodiment, the "position of the seam portion S" indicates a position in the width direction (radial direction) of the welded steel pipe W, and specifically includes the following positions.
·Width of seam portion S
·Center position (coordinates) of seam portion S
·Upper end position (coordinates) of seam portion S
·Lower end position (coordinates) of seam portion S

As illustrated in FIG. 1, the seam position detection apparatus 1 includes a seam width detection unit 11, a light source 12, an imaging unit 13, and an image processing unit 14. In FIG. 1, the heater (annealing heater) 2 for heating the welded steel pipe W and a control unit 3 for controlling the heater 2 are extracted and illustrated among the manufacturing equipments of the welded steel pipe W. Note that, specifically, the control unit 3 controls the position of the heater 2 based on the deviation amount of the position of a heating portion relative to the position of the seam portion S, which is detected by the seam position detection apparatus 1.

The seam width detection unit 11 detects the position of the seam portion S before heating. Specifically, the seam width detection unit 11 detects the width of the seam portion S before the heating step by the heater 2, that is, before an oxide film adheres to the welded steel pipe W. The seam width detection unit 11 is disposed in front of the heater 2. When a plurality of heaters 2 are arranged as described above, the seam width detection unit 11 is disposed in front of the first heater 2 (on the most upstream side in the conveyance direction of the welded steel pipe W).

As illustrated in FIG. 2, for example, the seam width detection unit 11 includes a light source 111, an imaging unit 112, and an image processing unit 113.

The light source 111 irradiates the seam portion S before heating with light. As the light source 111, for example, a blue light source, a green light source, or the like can be used. The light source 111 and the imaging unit 112 are disposed so as to be able to capture an image of the seam portion S of the welded steel pipe W under specular reflection conditions.

The imaging unit 112 captures an image of the seam portion S before heating, which is irradiated with light by the light source 111. The imaging unit 112 has a channel capable of receiving light in a wavelength range, which is emitted by the light source 111.

The image processing unit 113 is realized by, for example, a general-purpose computer such as a workstation or a personal computer. The image processing unit 113 applies a known image processing technology to an image captured by the imaging unit 112, and detects the width of the seam portion S based on, for example, a difference in luminance between the seam portion S and a base material portion. Details of processing in the image processing unit 113 will be described later.

Note that the configuration of the seam width detection unit 11 is not limited to the above. In the present embodiment, the width of the seam portion S is detected from the difference in luminance between the seam portion S and the base material portion by using the image processing technology, but the width of the seam portion S may be detected by using a non-destructive measurement technology such as an ultrasonic wave or an electromagnetic wave. However, as compared with the non-destructive measurement technology, the image processing technology has a smaller cost and a smaller burden at the time of arithmetic processing, and thus it is preferable to use the image processing technology. Furthermore, the image processing unit 113 may be configured integrally with the image processing unit 14 to be described later. Hereinafter, referring back to FIG. 1, the remaining configuration of the seam position detection apparatus 1 will be described.

The light source 12 irradiates the seam portion S after heating and the heating portion with light. As the light source 12, for example, a blue light source, a green light source, or the like can be used. Further, specifically, the light source 12 emits light in a first wavelength range. The first wavelength range is a wavelength range that does not interfere with a second wavelength range to be described later. Usually, the temperature heated by the heater 2 is about 1100°C at maximum. Therefore, as the first wavelength range, it is preferable to use a wavelength range of, for example, 550 nm or less which has almost no sensitivity to thermal radiation from the heating portion and is hardly affected by the thermal radiation.

Further, for example, as shown in FIG. 1, when only one heater 2 is disposed, the light source 12 irradiates the welded steel pipe W behind the heater 2 (downstream side in the conveyance direction) with light. On the other hand, when a plurality of heaters 2 are arranged, the light source 12 irradiates the welded steel pipe W behind any one of the heaters 2 with light. When a plurality of heaters 2 are arranged, the light source 12 preferably irradiates the welded steel pipe W between the first heater 2 and the second heater 2 with light.

Note that a control unit that controls the light amount of the light source 12 is connected to the light source 12. For example, when the diameter of the welded steel pipe W is changed, a distance from the light source 12 to the seam portion S is also changed, and thus, the light amount of the light source 12 is changed by the control unit according to the distance from the light source 12 to the seam portion S. The light source 12 and the imaging unit 13 are disposed so as to be able to capture an image of the seam portion S of the welded steel pipe W under specular reflection conditions.

The imaging unit 13 captures images of the seam portion S after heating and the heating portion, which are irradiated with light by the light source 12. Further, for example, as illustrated in FIG. 1, when only one heater 2 is disposed, the imaging unit 13 captures an image of the welded steel pipe W behind the heater 2 (on the downstream side in the conveyance direction). On the other hand, when a plurality of heaters 2 are arranged, the imaging unit 13 captures an image of the welded steel pipe W behind any one of the heaters 2. When a plurality of heaters 2 are arranged, the imaging unit 13 preferably captures an image of the welded steel pipe W between the first heater 2 and the second heater 2.

Furthermore, the imaging unit 13 includes a first channel capable of receiving light in a first wavelength range, which is emitted by the light source 12. In addition to the first channel, the imaging unit 13 may have a second channel capable of receiving light in a second wavelength range, corresponding to thermal radiation generated by red heat of the seam portion S of the welded steel pipe W.

Note that a control unit that controls a focal length of the imaging unit 13 is connected to the imaging unit 13. For example, when the diameter of the welded steel pipe W is changed, a distance from the imaging unit 13 to the seam portion S is also changed, and thus the control unit changes the focal length of the imaging unit 13 according to the distance from the imaging unit 13 to the seam portion S. Note that a method of changing the focal length of the imaging unit 13 is not particularly limited, and for example, in a case where the imaging unit 13 is equipped with a liquid lens, the focal length can be changed by changing current supplied to the liquid lens.

The image processing unit 14 is realized by, for example, a general-purpose computer such as a workstation or a personal computer. The image processing unit 14 applies a known image processing technology to an image captured by the imaging unit 13, and detects the positions of the seam portion S after heating and the heating portion. In addition, the image processing unit 14 functions as a position detection unit that performs a seam position detection step and a heating position detection step, a determination unit that performs a determination step, and a correction unit that performs a correction step in a seam position detection method to be described later. As a method of detecting the positions of the seam portion S after heating and the heating portion, for example, the following method can be used.

For example, in a case where only the first channel of the imaging unit 13 is used, the imaging unit 13 captures an image (a first image) irradiated with light in the first wavelength range from the light source 12 and an image (a second image) not irradiated with the light in the first wavelength range. Then, the image processing unit 14 takes a difference between the first image and the second image to detect the positions of the seam portion S after heating and the heating portion.

Furthermore, for example, in a case where the first channel and the second channel of the imaging unit 13 are used, the imaging unit 13 captures an image (a reflection image) irradiated with light in the first wavelength range from the light source 12 and an image (a radiation image) irradiated with thermal radiation from the heating portion. Then, the image processing unit 14 detects the position of the seam portion S after heating based on a difference in luminance between the seam portion S and the base material portion, and detects the position of the heating portion based on a difference in luminance between the heating portion and the other portion.

In addition, the image processing unit 14 determines whether correction is necessary for the detected position of the seam portion S after heating. In this determination, as will be described later, when the seam portion S after heating cannot be accurately detected due to, for example, adhesion of an oxide film, it is determined that correction is necessary. Then, when it is determined that correction is necessary, the position of the seam portion S after heating is corrected based on the width of the seam portion S before heating, which is detected in advance by the seam width detection unit 11. Details of these processes will be described later.

As illustrated in FIG. 1, since the position of the welded steel pipe W in which the width of the seam portion S before heating is detected by the seam width detection unit 11 and the position of the welded steel pipe W imaged by the imaging unit 13 are separated from each other, the detection time of the seam portion S before and after heating deviates. However, since the conveyance speed of the welded steel pipe W and the distance between the seam width detection unit 11 and the imaging unit 13 are known, the position of the seam portion S after heating is corrected by calculating and matching the deviation of the respective detection times from the above information.

In addition, in the present embodiment, the position of the seam portion S is detected from a difference in luminance between the seam portion S and the base material portion by using the image processing technology, but the position of the seam portion S may be detected by using a non-destructive measurement technology such as an ultrasonic wave or an electromagnetic wave. However, as compared with the non-destructive measurement technology, the image processing technology has a smaller cost and a smaller burden at the time of arithmetic processing, and thus it is preferable to use the image processing technology.

### (Details of Seam Position Detection)

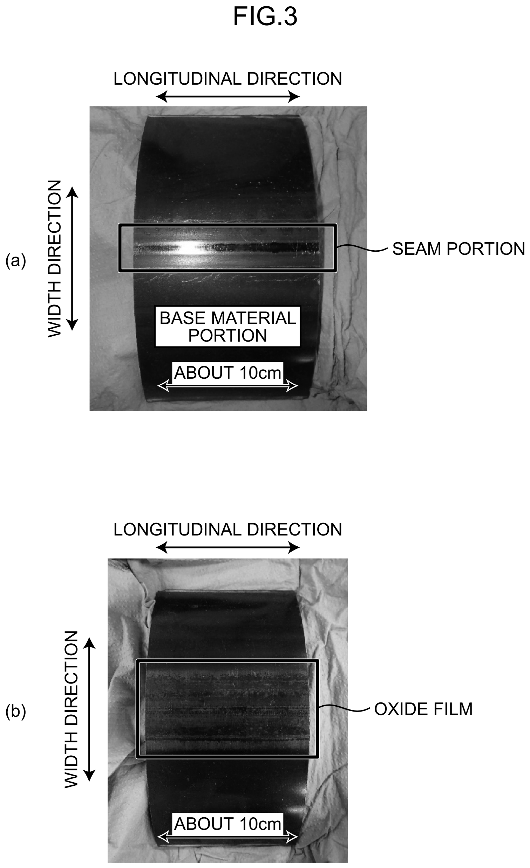

Hereinafter, details of detection of the position of the seam portion S by the seam position detection apparatus 1 according to the embodiment will be described with reference to FIGS. 3 to 6.

The seam portion S of the welded steel pipe W has a higher mirror surface property than that of a base material portion immediately after the cutting step. Therefore, for example, when the imaging unit 13 images reflected light from the light source 12 under the specular reflection conditions, a region corresponding to the seam portion S looks shiny (a luminance value is high).

(a) of FIG. 3 illustrates an image of a sample cut out from a welded steel pipe manufactured without being heated by the heater 2. Since this sample is not heated, there is no adhesion of an oxide film. In FIG. 3, a vertical direction of an image is defined as a width direction, and a horizontal direction is defined as a longitudinal direction. As illustrated in FIG. 3, before heating by the heater 2, an oxide film does not adhere to the seam portion S of a center portion in the width direction, and a mirror surface property of the seam portion S is higher than that of a base material portion. Therefore, the seam portion S looks shiny in the image captured by the imaging unit 13, and the seam portion S can be easily detected.

On the other hand, when the heating temperature of the heater 2 is high, or when the conveyance speed of the welded steel pipe W is slow such that the heating time is long, the oxide film adheres to a region centered on the heating portion, and the mirror surface property deteriorates. (b) of FIG. 3 illustrates an image of a sample cut out from a welded steel pipe manufactured by heating using the heater 2. Since this sample is heated, it can be expected that the influence of the adhesion of the oxide film is observed. Actually, as illustrated in (b) of FIG. 3, after heating by the heater 2, the oxide film adheres to the seam portion S of a center portion in the width direction, and the mirror surface property of the seam portion S is lost. In the region to which the oxide film adheres as described above, the seam portion S looks dark even if the imaging unit 13 images reflected light from the light source 12 under the specular reflection conditions. Therefore, it is difficult to detect a difference between the region to which the oxide film adheres and the base material portion, and it is difficult to detect an accurate position of the seam portion S.

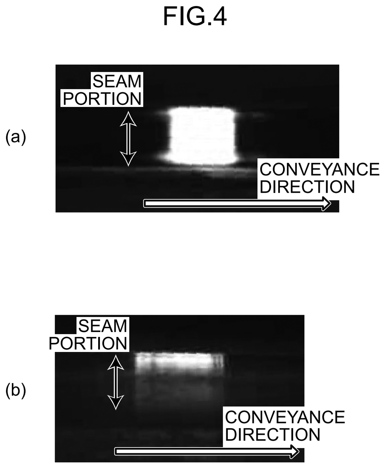

Subsequently, (a) of FIG. 4 is an image of the welded steel pipe W after heating by the heater 2, and illustrates an image in a case where the conveyance speed of the welded steel pipe W is high and the adhesion of the oxide film to the seam portion S is small. Further, (b) of FIG. 4 is an image of the welded steel pipe W after heating by the heater 2, and illustrates an image in a case where the conveyance speed of the welded steel pipe W is slow and the adhesion of the oxide film to the seam portion S is large.

When the adhesion amount of the oxide film is small as illustrated in (a) of FIG. 4, the mirror surface property is high over the entire width direction surface of the seam portion S, and the luminance value of the seam portion S is higher than that of the base material portion, so that the position of the seam portion S can be easily detected. On the other hand, when the adhesion amount of the oxide film is large as in (b) of FIG. 4, the mirror surface property is lost at a part of the seam portion S, and the luminance value is about the same as that of the base material portion, so that it is difficult to detect the position of the seam portion S.

In the above description, the conveyance speed of the welded steel pipe W has been described as a representative parameter that affects the adhesion amount of the oxide film to the seam portion S, but the parameter that affects the adhesion amount of the oxide film is not limited thereto. For example, the heating temperature of the welded steel pipe W (output of the heater 2), the atmosphere in the heating step (amount of oxygen, moisture, and the like), the material of the welded steel pipe W, and the like are also included in the parameters affecting the adhesion amount of the oxide film.

Further, for example, when the heater 2 deviates from the center position of the seam portion S in the width direction (the upper end side or the lower end side of the seam portion S), the oxide film is generated only on a part (one side in the width direction) of the seam portion S. In this case, a part of the seam portion S can be detected due to the mirror surface property, but the remaining part cannot be detected because the mirror surface property is lost by the oxide film. Therefore, in the seam position detection apparatus 1 according to the present embodiment, when the accurate position of the seam portion S cannot be detected due to the adhesion of the oxide film to a part of the seam portion S, the region in which the accurate position of the seam portion S cannot be detected is complemented by the image processing technology.

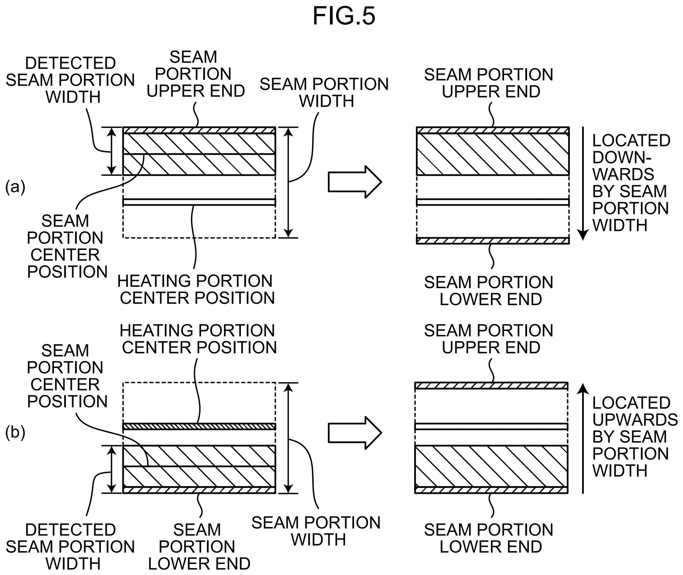

FIG. 5 is a diagram for description of a method of correcting the position of the seam portion S when the oxide film adheres to a part of the seam portion S. (a) of FIG. 5 is a diagram for description of a correction method in a case where the detected center position of the seam portion S after heating is located above the center position of the heating portion. (b) of FIG. 5 is a diagram for description of a correction method in a case where the detected center position of the seam portion S after heating is located below the center position of the heating portion.

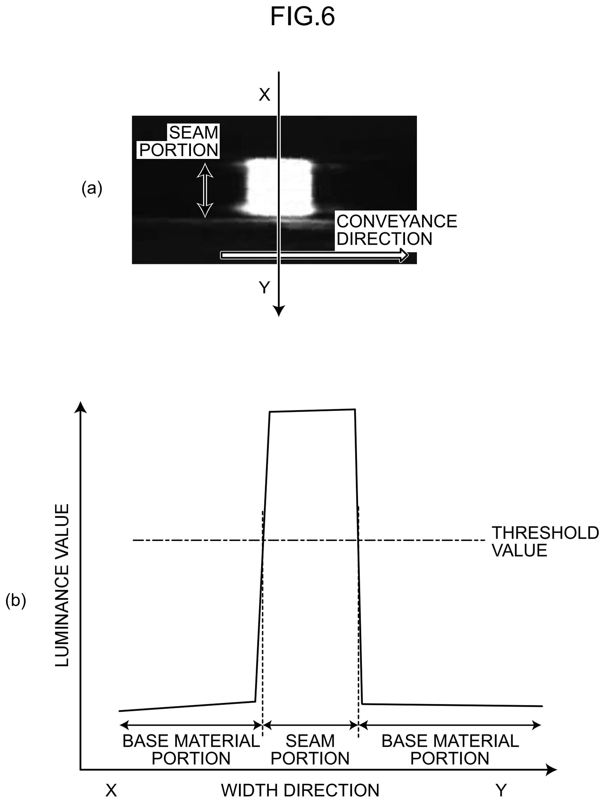

When the position of the seam portion S is corrected, first, the center position of the seam portion S after heating and the center position of the heating portion are detected. An example of a detection method in this case is illustrated in FIG. 6. (a) of FIG. 6 is an example of an image of the seam portion captured by the imaging unit 13. In (a) of FIG. 6, the conveyance direction of the welded steel pipe W is from left to right. (a) of FIG. 6 and (b) of FIG. 6 are created. (b) of FIG. 6 illustrates the output of the imaging unit 13 from X to Y in (a) of FIG. 6 by luminance values.

In (b) of FIG. 6, since the seam portion has a higher luminance value due to a difference in surface emissivity than that of the base material portion, the position of the seam portion can be detected by detecting a range in which the luminance value is high. In order to calculate the center position of the seam portion, first, the upper end position or the lower end position of the seam portion is detected. In order to detect the end position at which the luminance value is high, a threshold value is set, and a range exceeding the threshold value is determined as a seam portion. In the present embodiment, for example, 50% of the maximum value of a luminance value waveform is set as the threshold value, but the threshold value may be appropriately changed according to manufacturing conditions and the scale of the heater 2.

In (b) of FIG. 6, the luminance value is searched from the X direction to the Y direction in the width direction, and the position at which the luminance value exceeds the threshold value for the first time is set as the upper end position of the seam portion. The upper end position of the seam portion here also corresponds to the upper end position of the seam portion in (a) of FIG. 6. Subsequently, contrary to the above description, the luminance value is searched from Y toward the X direction in the width direction, and a position at which the luminance value exceeds the threshold value for the first time is set as the lower end position of the seam portion. The lower end position of the seam portion here corresponds to the lower end position of the seam portion in (a) of FIG. 6.

Through these steps, the upper end position and the lower end position of the seam portion S are detected. Then, the center position of the seam portion S is detected by averaging the upper end position and the lower end position. Similarly, for the image captured by the imaging unit 13, the luminance value of the heating portion is higher than that of the peripheral portion that is not heated. Therefore, the center position of the heating portion is detected by detecting the upper end position and the lower end position of the heating portion based on the luminance value and the like and averaging the upper end position and the lower end position.

Here, in a case where the oxide film does not adhere to the seam portion, the upper end position or the lower end position of the seam portion can be accurately detected by the method using only the "luminance threshold value" described so far, and thus it is not necessary to perform correction by a method to be described later. On the other hand, as illustrated in (b) of FIG. 4, when the oxide film adheres to a part of the seam portion, the emissivity of a portion to which the oxide film adheres is substantially the same as or very close to that of the base material portion. Therefore, it is difficult to detect the portion to which the oxide film adheres as the seam portion. In the detection of the heating portion, since there is no influence of the oxide film, the upper end position or the lower end position of the heating portion can be accurately detected by the method using only the "luminance threshold value" without performing correction by the method to be described below.

Subsequently, information on the width of the seam portion S before heating, which is detected by the seam width detection unit 11, is acquired. Then, as shown in (a) of FIG. 5, when the detected center position of the seam portion S after heating is located above the center position of the heating portion, the detected upper end position of the seam portion S is specified as the actual upper end position of the seam portion S. Subsequently, a position located below the upper end position of the seam portion S by the width of the seam portion S before heating is calculated as the lower end position of the seam portion S. According to the above procedure, when the oxide film adheres to a part (lower side) of the seam portion S, the position of the seam portion S is corrected.

On the other hand, as illustrated in (b) of FIG. 5, when the detected center position of the seam portion S after heating is located below the center position of the heating portion, the detected lower end position of the seam portion S is specified as the actual lower end position of the seam portion S. Subsequently, a position located above the lower end position of the seam portion S by the width of the seam portion S before heating is calculated as the upper end position of the seam portion S. According to the above procedure, when the oxide film adheres to a part (upper side) of the seam portion S, the position of the seam portion S is corrected.

Unlike (a) and (b) of FIG. 5, when the oxide film adheres to the detected entire surface of the seam portion S, it means that the center position of the seam portion S can be heated by the heater 2, and thus, it is not necessary to correct the position of the seam portion S as described above.

### (Seam Position Detection Method)

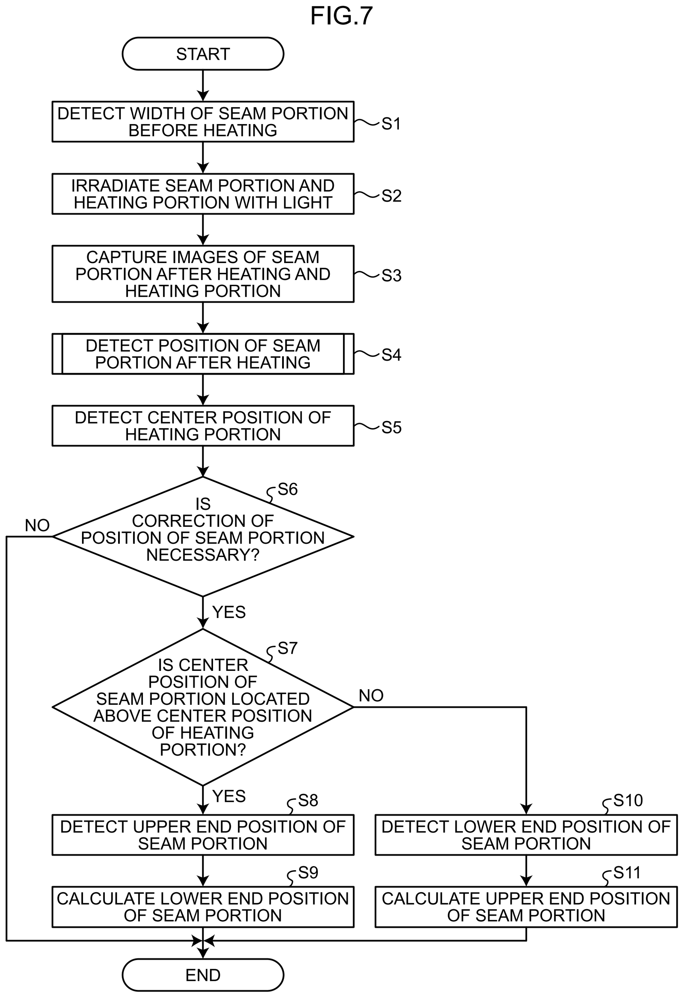

A seam position detection method according to an embodiment will be described with reference to FIGS. 7 to 9. As illustrated in FIG. 7, the seam position detection method according to the embodiment performs a seam width detection step (step S1), an irradiation step (step S2), an imaging step (step S3), a seam position detection step (step S4), a heating position detection step (step S5), a determination step (step S6), and a correction step (steps S7 to S11). Note that the seam width detection step may be performed in advance not immediately before the irradiation step but at another timing.

### <Seam Width Detection Step>

In the seam width detection step, the seam width detection unit 11 detects the width of the seam portion S before heating by the heater 2 (step S1). In the seam width detection step, the width of the seam portion S is detected using an image processing technology, a non-destructive measurement technology such as an ultrasonic wave or an electromagnetic wave, or the like. For example, in the case of using the image processing technology, the upper end position and the lower end position of the seam portion S are detected by specifying a portion at which a luminance value exceeds a predetermined threshold value with respect to an image captured by the imaging unit 112. Then, the width of the seam portion S before heating is calculated based on the upper end position and the lower end position of the seam portion S.

When the width (that is, the cutting width) of the seam portion S in the welded steel pipe W is determined in advance, information on the width of the seam portion S determined in advance may be used without performing the seam width detection step. However, when the welded steel pipe W is long, there is a possibility that variation in the width of the seam portion S, which is detected in the seam width detection step, increases. Therefore, by performing the seam width detection step before heating the welded steel pipe W, the width of the seam portion S can be more accurately detected.

### <Irradiation Step>

In the irradiation step, the light source 12 irradiates the seam portion S after heating by the heater 2 and the heating portion with light in a first wavelength range (step S2). As described above, the first wavelength range is set to a wavelength range different from (not interfering with a second wavelength range) the second wavelength range corresponding to thermal radiation due to heating.

### <Imaging Step>

In the imaging step, the imaging unit 13 captures an image of the seam portion S after heating by the heater 2 and the heating portion in the same field of view (step S3). In a case where only the first channel of the imaging unit 13 is used in the imaging step, an image (a first image) irradiated with light in the first wavelength range from the light source 12 and an image (a second image) not irradiated with the light in the first wavelength region are captured, respectively. Furthermore, in a case where the first channel and the second channel of the imaging unit 13 are used in the imaging step, an image (reflected image) irradiated with the light in the first wavelength range from the light source 12 and an image (radiation image) irradiated with the thermal radiation from the heating portion are captured, respectively.

### <Seam Position Detection Step>

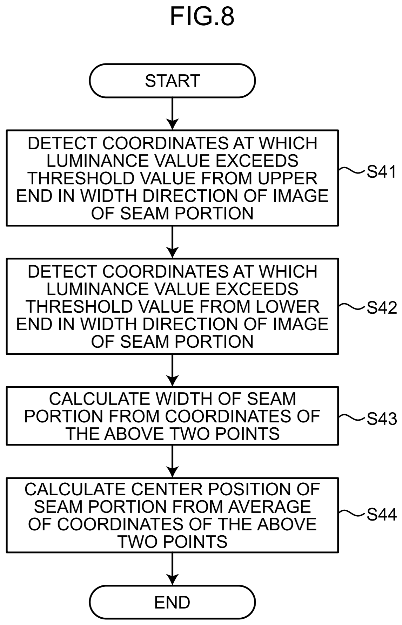

In the seam position detection step, the image processing unit 14 detects the position of the seam portion S after heating from the image captured in step S3 (step S4). Specifically, in the seam position detection step, the upper end position, the lower end position, the width, and the center position of the seam portion S are detected. Details of the seam position detection step will be described with reference to FIG. 8.

First, the image processing unit 14 detects coordinates at which a luminance value exceeds a predetermined threshold value from the upper end in the width direction of the image of the seam portion S (step S41), and specifies the upper end position of the seam portion S. Subsequently, the image processing unit 14 detects coordinates at which the luminance value exceeds the predetermined threshold value from the lower end of the image of the seam portion S in the width direction (step S42), and specifies the lower end position of the seam portion S. Subsequently, the image processing unit 14 calculates the width of the seam portion S from the coordinates of the above two points (step S43). Subsequently, the image processing unit 14 calculates the center position of the seam portion S from the average of the coordinates of the above two points (step S44). Hereinafter, referring back to FIG. 7, the description will be continued.

### <Heating Position Detection Step>

In the heating position detection step, the image processing unit 14 detects the position of the heating portion from the image captured in step S3 (step S5). Specifically, in the heating position detection step, the center position of the heating portion is detected.

A method of detecting the center position of the heating portion in the heating position detection step is similar to the method of detecting the center position of the seam portion S illustrated in FIG. 8. That is, coordinates at which a luminance value exceeds a predetermined threshold value may be detected from the upper end in the width direction and the lower end in the width direction of the image of the heating portion, and the center position of the heating portion may be calculated from the average of the coordinates of these two points.

### <Determination Step>

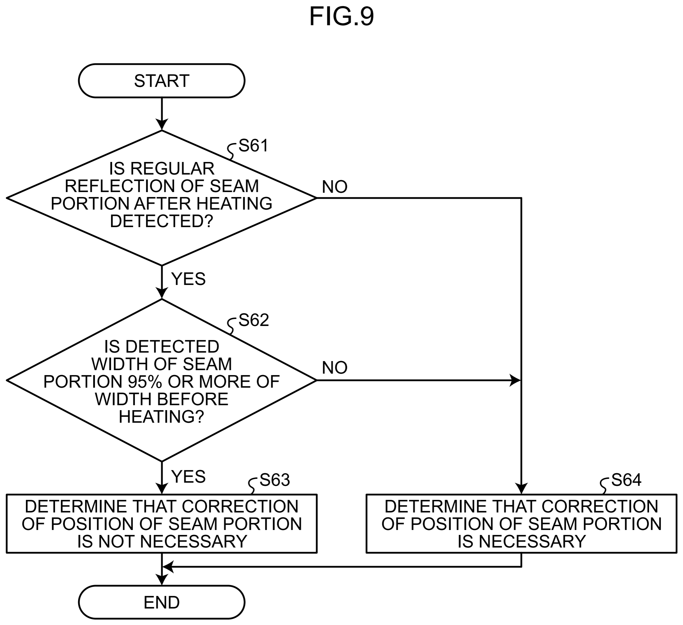

In the determination step, the image processing unit 14 compares the position (specifically, the width) of the seam portion S before heating, which is acquired in advance in step S1, with the position (specifically, the width) of the seam portion S after heating, thereby determining whether it is necessary to correct the position (specifically, the width) of the seam portion S after heating (step S6). For example, as illustrated in (b) of FIG. 4, the determination step is a step of determining whether the width of the seam portion S, which is detected in step S4, is different from the actual width due to adhesion of the oxide film to a part of the seam portion S. Details of the determination step will be described with reference to FIG. 9.

First, the image processing unit 14 determines whether specular reflection of the seam portion S after heating can be detected in the seam position detection step (step S61). In step S61, when it is determined that specular reflection of the seam portion S after heating can be detected (Yes in step S61), the image processing unit 14 determines whether the detected width of the seam portion S is 95% or more of the width of the seam portion S before heating (step S62). The "width of the seam portion S before heating" detected in step S1 is used.

When it is determined in step S62 that the detected width of the seam portion S is 95% or more of the width of the seam portion S before heating (Yes in step S62), the image processing unit 14 determines that it is unnecessary to correct the position of the seam portion S (step S63). In this case, "No" is determined in step S6 of FIG. 7, and this processing is completed.

Here, in step S61, when it is determined that specular reflection of the seam portion S after heating cannot be detected (No in step S61), the image processing unit 14 determines that it is necessary to correct the position of the seam portion S (step S64). In addition, when it is determined in step S62 that the detected width of the seam portion S is not 95% or more (less than 95%) of the width of the seam portion S before heating (No in step S62), the image processing unit 14 also determines that it is necessary to correct the position of the seam portion S (step S64). In these cases, "Yes" is determined in step S6 in FIG. 7, and the processing proceeds to step S7 in FIG. 7. Hereinafter, referring back to FIG. 7, the description will be continued.

### <Correction Step>

In the correction step, when it is necessary to correct the position of the seam portion S after heating, the image processing unit 14 corrects the position of the seam portion S after heating based on the position of the seam portion S before heating. Specifically, in the correction step, the width of the seam portion S after heating is corrected based on a positional relationship between the center position of the seam portion S after heating and the center position of the heating portion, and the width of the seam portion S before heating. Details of the correction step will be described below.

First, the image processing unit 14 determines whether the center position of the seam portion S, which is detected in step S4, is located above the center position of the heating portion, which is detected in step S5 (step S7). In step S7, when it is determined that the center position of the seam portion S is located above the center position of the heating portion (Yes in step S7), the image processing unit 14 detects the upper end position of the seam portion S by specifying a portion at which a luminance value exceeds a predetermined threshold value in the image captured in step S3 (step S8). Subsequently, the image processing unit 14 calculates a position located below the upper end position of the seam portion S, which is detected in step S8, by the width of the seam portion S before heating, which is acquired in advance in step S1, as the lower end position of the seam portion S (step S9), and completes the present processing.

On the other hand, when it is determined in step S7 that the center position of the seam portion S is not located above (lower than) the center position of the heating portion (No in step S7), the image processing unit 14 detects the lower end position of the seam portion S by specifying a portion at which the luminance value exceeds the predetermined threshold value in the image captured in step S3 (step S10). Subsequently, the image processing unit 14 calculates a position located above the lower end position of the seam portion S, which is detected in step S10, by the width of the seam portion S before heating, which is acquired in advance in step S1, as the upper end position of the seam portion S (step S11), and completes the present processing. Note that when it is determined in step S6 that the position of the seam portion S after heating does not need to be corrected (No in step S6), this processing is also completed.

### (Manufacturing equipment and Manufacturing Method of Welded Steel Pipe)

The manufacturing equipment of the welded steel pipe W includes, for example, a welding machine, a cutting machine, one or a plurality of heaters 2, the control unit 3, and the seam position detection apparatus 1.

The welding machine welds a butt portion of a steel plate formed into a cylindrical shape. The cutting machine cuts a bead portion of the welded steel pipe W formed after welding by the welding machine. The heater 2 heats the seam portion S after cutting by the cutting machine. The control unit 3 controls the position of the heater 2 based on the deviation amount of the position of a heating portion with respect to the position of the seam portion S, which is detected by the seam position detection apparatus 1. The seam position detection apparatus 1 is provided behind any one of the heaters 2, and detects the position of the seam portion S of the welded steel pipe W.

### (Quality Control Method)

A quality control method of the welded steel pipe W controls the quality of the welded steel pipe W based on the deviation amount of the position of the heating portion with respect to the position of the seam portion S, which is detected by the seam position detection apparatus 1. In the quality control method, for example, when the deviation amount is greater than or equal to a predetermined threshold value, an inspection step of inspecting whether the quality of the welded steel pipe W (for example, toughness or the like) satisfies predetermined required specifications is performed. Then, based on the result of the inspection step, it is determined whether the welded steel pipe W is reused as a graded product or discarded as an NG product. As described above, the welded steel pipes W are classified based on the deviation amount of the position of the heating portion with respect to the position of the seam portion S, thereby making it possible to provide the welded steel pipe W having excellent quality.

In the seam position detection method, the manufacturing method of the welded steel pipe, the quality control method of the welded steel pipe, the seam position detection apparatus, and the manufacturing equipment of the welded steel pipe according to the embodiment described above, for example, when only a part of the position of the seam portion S is detected due to the adhesion of the oxide film, the position of the seam portion S is complemented by using information of the seam portion S before heating, to which the oxide film does not adhere. As a result, even in a case where the oxide film adheres to the seam portion S such that the mirror surface property deteriorates, the position of the seam portion S can be accurately detected.

Therefore, according to the seam position detection method, the manufacturing method of the welded steel pipe, the quality control method of the welded steel pipe, the seam position detection apparatus, and the manufacturing equipment of the welded steel pipe according to the embodiment, the position of the seam portion S of the welded steel pipe W can be accurately detected in the manufacturing step of the welded steel pipe W.

### (Examples)

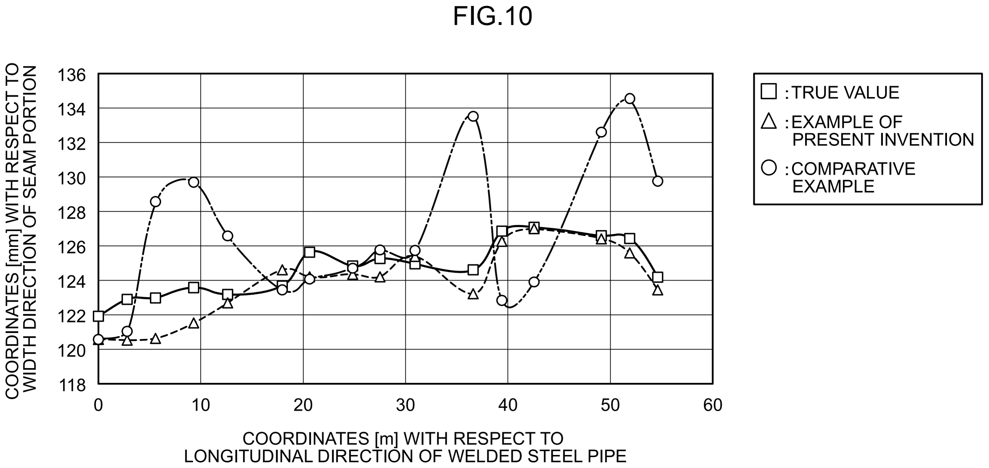

An example of the seam position detection method according to the present invention will be described with reference to FIG. 10. In the present example, the welded steel pipe W was conveyed at a conveying speed (7 m/min) at which an oxide film easily adheres to the surface, and the center position of the seam portion of the welded steel pipe W was detected by the present invention, the related art, and visual observation. As manufacturing equipments (including the heater 2 and the control unit 3) of the welded steel pipe W and the seam position detection apparatus 1, equipments exemplified in FIG. 1 were used. FIG. 10 illustrates a result of comparing true values of the center position of the seam portion, which is calculated by the present invention example, the center position of the seam portion, which is calculated by a comparative example, and the center position of the seam portion, which is calculated by another method. In FIG. 10, a vertical axis represents coordinates (unit: mm) with respect to the width direction of the seam portion, and a horizontal axis represents coordinates (unit: m) with respect to the longitudinal direction of the welded steel pipe W.

In the example of the present invention, the center position of the seam portion was calculated by the seam position detection method according to the present invention (refer to FIG. 5) at about every 3 m in the longitudinal direction of the steel pipe. In addition, in the comparative example, the center position of the seam portion was calculated by the position detection method using only the luminance threshold value (the method described in paragraphs 0051 to 0053) at about every 3 m in the longitudinal direction of the steel pipe. In addition, as a true value, the operator visually calculated the center position of the seam portion. At that time, the resolution of the captured image was set to 0.1656 mm/pix.

As illustrated in FIG. 10, a standard deviation σ of the deviation amount of the center position of the seam portion, which was calculated in the present invention, was 1.24016 mm with respect to the center position of the seam portion, which is a true value. On the other hand, a standard deviation σ of the deviation amount of the center position of the seam portion, which was calculated with the luminance threshold value of the related art without using the present invention, was 4.54604 mm with respect to the true value. As described above, it has become clear that detection accuracy of the center position of the seam portion is improved by about four times by using the seam position detection method according to the present invention.

### Reference Signs List

1 SEAM POSITION DETECTION APPARATUS
11 SEAM WIDTH DETECTION UNIT
12, 111 LIGHT SOURCE
13, 112 IMAGING UNIT
14 IMAGE PROCESSING UNIT
2 HEATER
3 CONTROL UNIT
S SEAM PORTION
W WELDED STEEL PIPE

## Claims

1. A seam position detection method of detecting a position of a seam portion of a welded steel pipe when the welded steel pipe is heated, the seam position detection method comprising:
a position detection step of detecting a position of the seam portion after heating and a position of a heating portion from images obtained by capturing the seam portion after heating and the heating portion each irradiated with light having a wavelength different from a wavelength of thermal radiation by heating, the images being captured in a same field of view;
a determination step of determining whether the position of the seam portion after heating needs to be corrected by comparing
a position of the seam portion before heating, the position being acquired in advance, and
the position of the seam portion after heating; and
a correction step of correcting, based on the position of the seam portion before heating, the position of the seam portion after heating when the position of the seam portion after heating needs to be corrected.

2. The seam position detection method according to claim 1, wherein, in the correction step, a width of the seam portion after heating is corrected based on
a positional relationship between a center position of the seam portion after heating and a center position of the heating portion, and
a width of the seam portion before heating.

3. A manufacturing method of a welded steel pipe, the manufacturing method comprising:
a welding step of welding a butt portion of a steel plate formed into a cylindrical shape;
a cutting step of cutting a bead portion after welding;
a heating step of heating a seam portion after cutting with a heater; and
a position detection step of detecting a position of the seam portion by the seam position detection method according to claim 1 or 2.

4. A quality control method of a welded steel pipe, the quality control method controlling quality of the welded steel pipe based on a deviation amount of the position of the heating portion with respect to the position of the seam portion, the deviation amount being detected by the seam position detection method according to claim 1 or 2.

5. A seam position detection apparatus configured to detect a position of a seam portion of a welded steel pipe when the welded steel pipe is heated, the seam position detection apparatus comprising:
a position detection unit configured to detect a position of the seam portion after heating and a position of a heating portion from images obtained by capturing the seam portion after heating and the heating portion each irradiated with light having a wavelength different from a wavelength of thermal radiation by heating, the images being captured in a same field of view;
a determination unit configured to determine whether the position of the seam portion after heating needs to be corrected by comparing
a position of the seam portion before heating, the position being acquired in advance, and
the position of the seam portion after heating; and
a correction unit configured to correct, based on the position of the seam portion before heating, the position of the seam portion after heating when the position of the seam portion after heating needs to be corrected.

6. A manufacturing equipment of a welded steel pipe, the manufacturing equipment comprising:
a welding machine configured to weld a butt portion of a steel plate formed into a cylindrical shape;
a cutting machine configured to cut a bead portion after welding;
one or a plurality of heaters configured to heat a seam portion after cutting; and
the seam position detection apparatus according to claim 5, the seam position detection apparatus being provided behind any one of the heaters.
